# EUROPÄISCHE PATENTANMELDUNG

(11) **EP 1 186 395 A2**
(43) Veröffentlichungstag der Anmeldung: **13.03.2002**
(21) Anmeldenummer: 01112351.0
(22) Anmeldetag: 19.05.2001
(51) Int. Cl.: B29C 47/02, B29C 47/06, B32B 31/30

(54) **Verfahren zum Herstellen einer Materialbahn mit einer Butylkautschukmasse**

(30) Priorität: 31.05.2000 DE 10026783
(71) Anmelder: CWW-GERKO Akustik GmbH & Co. KG, 67547 Worms (DE)
(72) Erfinder: Freist, Christoph, Dr., 33613 Bielefeld (DE); Polak, Josef, Dr., 55294 Bodenheim 4 (DE); Oster, Joachim, 65527 Niedernhausen (DE); Kulcsàr, Joska, 63549 Ronnenburg (DE)
(74) Vertreter: Schlagwein, Udo, Dipl.-Ing.

(57) **Zusammenfassung**

Zum Aufbringen einer Butylkautschukmasse oder einer vergleichbaren Masse auf eine Materialbahn mittels einer Breitschlitzdüse (5) werden die für die Butylkautschukmasse erforderlichen Rohstoffe unmittelbar einem Doppelschneckenextruder (1) zugeführt und in ihm vermischt, plastifiziert und dann unter Druck in die Breitschlitzdüse (5) geleitet.

## Beschreibung

Die Erfindung betrifft ein Verfahren zum Herstellen einer Materialbahn mit einer Butylkautschukmasse oder einer vergleichbaren Masse, bei welchem die für die Butylkautschukmasse erforderlichen Rohstoffe vermischt, plastifiziert und dann unter Druck auf die Materialbahn aufgebracht werden.

Verfahren der vorstehenden Art werden beispielsweise zur Erzeugung von Klebeschichten auf Dachbahnen oder zur Herstellung von auf Karosserieblechen aufzuklebenden Entdröhnungsfolien eingesetzt und sind allgemein bekannt. Die für die Beschichtung vorgesehenen Butylkautschukmassen werden bisher diskontinuierlich hergestellt. Dazu werden die verschiedenen Rohstoffe nacheinander in sogenannte Innenmischer eingefüllt, dort miteinander vermischt und anschließend mit einer Austragsschnecke ausgetragen. Um damit kontinuierlich beschichtete Materialbahnen herstellen zu können, ist es erforderlich, die diskontinuierlich erzeugte Butylkautschukmasse zwischenzulagern. Bei der Zwischenlagerung muss das Material mit Trennmittel beaufschlagt oder alternativ durch Silikonpapier getrennt werden. Die zwischengelagerte und sich dabei abkühlende Butylkautschukmasse wird von Hand in einen Extruder eingegeben, plastifiziert und dann über eine Breitschlitzdüse einem Dreiwalzenkalander zugeführt und dort zu Bahnen unterschiedlicher Dicke und Breite ausgewalzt.

Das bekannte Verfahren bedingt hohe Investitionskosten, einen hohen Personalaufwand und einen hohen Energieaufwand, hat aber dennoch nur eine geringe Durchsatzleistung. Weiterhin hat sich als nachteilig herausgestellt, dass es zu einer Verfälschung der Rezepturen durch das bei der Zwischenlagerung erforderliche Trennmittel, zu einer schlechten Homogenität der hergestellten Massen und zu einem schlechten Aufschluss und damit zu einer schlechten Ausnutzung des Butyls kommt. Bei einem Rezepturwechsel muss der Mischer mit hohem Aufwand gereinigt werden, damit keine Restmengen der alten Rezeptur in das Material nach der neuen Rezeptur gelangen.

Der Erfindung liegt das Problem zugrunde, ein Verfahren der eingangs genannten Art zu entwickeln, durch welches Materialbahnen mit einer Butylkautschukmasse mit geringeren Energiekosten, hoher Durchsatzleistung und hoher Qualität des Endproduktes hergestellt werden können.

Dieses Problem wird erfindungsgemäß dadurch gelöst, dass das Vermischen und Plastifizieren kontinuierlich in einem Doppelschneckenextruder erfolgt.

Durch diese erfindungsgemäße Verwendung eines Doppelschneckenextruders, auch Zweischneckenextruder genannt, entfällt das Erfordernis der diskontinuierlichen Herstellung und Zwischenlagerung der Butylkautschukmasse. Dadurch kommt es während des Verfahrens nicht zu einer Abkühlung der Butylkautschukmasse. Weiterhin wird vermieden, dass Trennmittel die Zusammensetzung der Butylkautschukmasse verfälschen kann. Zusätzlich ermöglicht es die Erfindung, das Verfahren mit geringem Aufwand automatisch durchzuführen. Zudem erlangt das Verfahren durch die Erfindung eine hohe Flexibilität bezüglich Veränderungen der Zusammensetzung der Butylkautschukmasse, führt zu einer guten Ausnutzung des Butyls und ermöglicht eine für den Zusatz von Vulkanisatoren erforderliche, sehr genaue Temperatursteuerung.

Breitschlitzdüsen zum Umformen der Butylkautschukmasse zu einer Butylkautschukfolie erfordern in der Regel einen konstanten Eingangsdruck der zugeführten Butylkautschukmasse. Bei Doppelschneckenextrudern kommt es jedoch zu Schwankungen des Druckes in der ausgebrachten Masse. Solche Druckschwankungen lassen sich durch den Einbau einer geregelten Hochdruckpumpe mit einem nachfolgenden Filter abdämpfen.

Die unterschiedlichen Rohstoffe bedingen oftmals unterschiedliche Mischungszeiten und unterschiedliche Temperaturen bei der Zudosierung in den Doppelschneckenextruder. Das kann man optimal berücksichtigen, wenn die Rohstoffe dem Doppelschneckenextruder über seine Länge an verschiedenen Stellen zugeführt werden.

Auf einen hohe Investitionskosten erfordernden Dreiwalzenkalander kann man verzichten, indem die Butylkautschukmasse mit Hilfe einer Hochdruckpumpe und einer Breitschlitzdüse unmittelbar zu einer die Materialbahn beschichtenden Butylkautschukfolie umgeformt wird. Wichtig ist dabei, dass vor der Breitschlitzdüse ein Filter angeordnet wird.

Die Butylkautschukmasse kann beim Aufbringen auf die Materialbahn zugleich auf einfache Weise gekühlt werden, wenn gemäß einer anderen Weiterbildung der Erfindung die zu beschichtende Materialbahn über ein umlaufendes Stahlband oder eine gekühlte Walze geführt und dort die Butylkautschukfolie auf die Materialbahn aufgebracht wird. Alternativ zur Beschichtung über eine Breitschlitzdüse können Beschichtungen mit größerer Dicke auch über eine Rakel auf eine Trägerbahn aufgebracht werden.

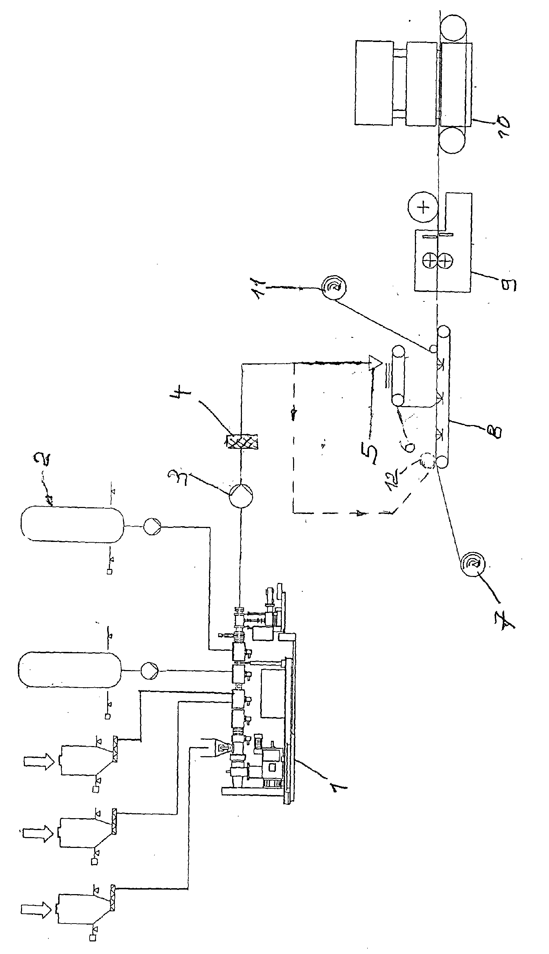

Zur näheren Erläuterung des erfindungsgemäßen Verfahrens wird nachfolgend auf die Zeichnung Bezug genommen. Diese zeigt einen Doppelschneckenextruder 1, dem aus Behältern 2 über Austragsschnecken oder Pumpen Rohstoff über seine Länge in unterschiedlichen Bereichen zugeführt wird.

Die im Doppelschneckenextruder 1 erzeugte Butylkautschukmasse gelangt über eine druckgeregelte Hochdruckpumpe 3 und einem Filter 4 zu einer Breitschlitzdüse 5, mit der auf einem Ablageband 6 eine Butylkautschukfolie festgelegter Dicke und Breite geformt wird. Diese Butylkautschukfolie wird mit einer Materialbahn einer Folienabrollung 7 vereint, indem diese Materialbahn über ein Stahlband 8 geführt wird. Es schließt sich eine Aufwickelstation 9 an. Von einer Folienabrollung 11 gelangt eine als Abdeckung dienende Alufolie auf die Materialbahn. Wenn man ausschließlich eine beschichtete Materialbahn erzeugen will, beispielsweise eine Dachfolie, dann ist der Fertigungsprozess nach dem Aufwickeln in der Aufwickelstation 9 abgeschlossen.

Wenn einzelne Teile aus der mit Butylkautschukmasse versehenen Materialbahn ausgestanzt werden sollen, dann führt man die Materialbahn in eine Stanze 10. Will man mit einer Anlage wahlweise Stanzteile oder Materialbahnen erzeugen, dann kann man die Aufwickelstation 9 und die Stanze 10 hintereinander anordnen, wie das in der Zeichnung gezeigt ist. Will man Stanzen, dann lässt man die Materialbahn durch die Aufwickelstation 9 hindurch zur Stanze 10 fahren. Natürlich ist es auch möglich, in einer Anlage nur eine Aufwickelstation 9 oder eine Stanze 10 vorzusehen.

Gestrichelt dargestellt ist in der Zeichnung eine Rakel 12. Wie durch eine gestrichelte Linie gezeigt wird, kann die Butylkautschukmasse statt der Breitschlitzdüse 5 auch dieser Rakel 12 zugeführt werden, was zweckmäßig ist, wenn man größere Beschichtungsdicken erreichen will.

### Bezugszeichenliste

- 1: Doppelschneckenextruder
- 2: Behälter
- 3: Hochdruckpumpe
- 4: Filter
- 5: Breitschlitzdüse

- 6: Ablageband
- 7: Folienabrollung
- 8: Stahlband
- 9: Aufwickelstation
- 10: Stanze

- 11: Folienabrollung
- 12: Rakel

## Patentansprüche

1. Verfahren zum Aufbringen einer Butylkautschukmasse oder einer vergleichbaren Masse auf eine Materialbahn, bei welchem die für die Butylkautschukmasse erforderlichen Rohstoffe vermischt, plastifiziert und dann unter Druck auf die Materialbahn aufgebracht werden, **dadurch gekennzeichnet, dass** das Vermischen und Plastifizieren kontinuierlich in einem Doppelschneckenextruder (1) erfolgt.

2. Verfahren nach Anspruch 1, **dadurch gekennzeichnet, dass** die Butylkautschukmasse mittels einer geregelten Hochdruckpumpe (3) über ein Filter (4) einer Rakel (12) oder einer Breitschlitzdüse (5) zugeführt wird.

3. Verfahren nach den Ansprüchen 1 oder 2, **dadurch gekennzeichnet, dass** die Rohstoffe dem Doppelschneckenextruder (1) über seine Länge an verschiedenen Stellen zugeführt werden.

4. Verfahren nach zumindest einem der vorangehenden Ansprüche, **dadurch gekennzeichnet, dass** die Butylkautschukmasse mit Hilfe der Hochdruckpumpe (3) und der Breitschlitzdüse (5) unmittelbar zu einer die Materialbahn beschichtenden Butylkautschukfolie umgeformt wird.

5. Verfahren nach Anspruch 4, **dadurch gekennzeichnet, dass** die zu beschichtende Materialbahn über ein umlaufendes Stahlband (8) oder eine gekühlte Walze geführt und dort die Butylkautschukfolie auf die Materialbahn aufgebracht wird.
